(19) Europäisches Patentamt
European Patent Office
Office européen des brevets

(11) Veröffentlichungsnummer: **0 082 379**
**B1**

(12) # EUROPÄISCHE PATENTSCHRIFT

(45) Veröffentlichungstag der Patentschrift: **06.08.86**

(51) Int. Cl.⁴: **C 08 L 77/00**

(21) Anmeldenummer: **82111226.5**

(22) Anmeldetag: **04.12.82**

(54) **Leichtfliessende, schlagzähe Polyamide.**

(30) Priorität: **19.12.81 DE 3150453**

(43) Veröffentlichungstag der Anmeldung: **29.06.83 Patentblatt 83/26**

(45) Bekanntmachung des Hinweises auf die Patenterteilung: **06.08.86 Patentblatt 86/32**

(84) Benannte Vertragsstaaten: **DE FR GB IT**

(56) Entgegenhaltungen: **Keine Entgegenhaltungen.**

(73) Patentinhaber: **BAYER AG, Konzernverwaltung RP Patentabteilung, D-5090 Leverkusen 1 Bayerwerk (DE)**

(72) Erfinder: **Müssig, Bernhard, Dr., Eddelsener Weg 31, D-2105 Seevetal 1 (DE)**
Erfinder: **Meyer, Rolf-Volker, Dr., Buchheimer Strasse 23, D-4150 Krefeld (DE)**
Erfinder: **Brassat, Bert, Dr., Bethelstrasse 24, D-4150 Krefeld (DE)**
Erfinder: **Dhein, Rolf, Dr., Deswatinesstrasse 30, D-4150 Krefeld (DE)**

EP 0 082 379 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung sind leicht fliessfähige, schlagzähe Polyamidformmassen, die 0,5–10 Gew.-% endgruppenmodifizierter Polyether oder Polyester mit Molgewichten von 500 bis 10 000 und Erweichungspunkten < 100 °C enthalten.

Die Schlagzähigkeit von Formkörpern aus Polyamiden hängt erheblich vom Wassergehalt der Formkörper ab. Im wasserfreien Zustand, z.B. nach der Herstellung der Formkörper durch Spritzgiessen, sind besonders die aus leicht fliessfähigen und damit leicht verarbeitbaren Polyamid-Spritzgussmassen mit mittleren Molekulargewichten und hier wiederum die aus hochkristallinen Polyamiden hergestellten Formkörper relativ empfindlich gegen Schlagbeanspruchung.

Höhermolekulare Polyamide, wie sie vorzugsweise für die Extrusionsverarbeitung eingesetzt werden, liefern zwar weniger schlagempfindliche Formkörper, sind jedoch infolge ihrer stark erhöhten Schmelzviskosität und der daraus resultierenden schlechteren Fliessfähigkeit schwieriger zu verarbeiten.

Darüber hinaus erfordert die Herstellung höher viskoser Polyamide häufig eine teure und aufwendige Festphasennachkondensation.

Es besteht daher ein Bedarf nach rasch verarbeitbaren, leicht fliessenden Polyamidformmassen, aus denen sich Formkörper herstellen lassen, die in trockenem Zustand eine erhöhte Schlagzähigkeit besitzen. Insbesondere sind solche Polyamide von Interesse, die hohe Zugfestigkeit und leichte Verarbeitbarkeit kombiniert mit einer hohen Schlagzähigkeit aufweisen.

Es sind bereits verschiedene Verfahren zur Erhöhung der Zähigkeit von Polyamiden bekannt. So z.B. das Einmischen von niedermolekularen Weichmachern in Polyamide, das aber aus mehreren Gründen keine zufriedenstellende Lösung des Problems bringt. Der grösste Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid bewirken zwar eine Verbesserung der Zähigkeit. Sie können jedoch erst nach der Herstellung von Polyamidformkörpern in diese eingearbeitet werden, da sonst bei der Verarbeitung von entsprechend vorbehandelten Polyamidgranulaten wegen der relativ niederen Siedepunkte dieser Zusätze blasenhaltige Formkörper entstehen würden.

Dadurch ist dieses Verfahren im allgemeinen zu zeit- und kostenaufwendig und für die Herstellung dickwandiger Formteile wegen der unregelmässigen Verteilung der Zusätze unbrauchbar.

Nach anderen Verfahren wird die Schlagzähigkeit von Polyamiden durch Zumischen von bestimmten polymeren Stoffen verbessert. So wurden Polyethylene und Copolymerisate aus Vinylacetat und Ethylen mit mässigem Erfolg eingesetzt.

Bessere Resultate konnten z.B. mit $CO_2H$-Gruppen enthaltenden olefinischen Copolymeren sowie mit entsprechenden Pfropfpolymeren erzielt werden.

Dies gilt auch für die Modifikation mit Kautschukpolymeren, wie z.B. mit gepfropften Acrylat- oder Polybutadien-Kautschukteilchen, oder mit Weichblöcken, die durch Polykondensation in das Polyamid eingebaut werden. Die Zähigkeit ist für einige Anwendungszwecke nicht ausreichend.

Zur Herstellung höhermolekularer Polyamide unter Umgehung der Festphasennachkondensation ist eine Vielzahl von Versuchen mit dem Ziel der Verzweigung oder Vernetzung durchgeführt worden.

Prinzipiell sind dazu z.B. mehrfunktionelle Epoxide und besonders mehrfunktionelle Isocyanate geeignet.

Diese Verfahren können in der Tat zu Produkten mit höherer Zähigkeit führen. Die Schmelzviskosität der Produkte kann dabei aber ebenfalls so stark zunehmen, dass eine Verarbeitung im Spritzguss sehr schwierig werden kann.

Überraschenderweise wurde nun gefunden, dass man schlagzähe und leicht fliessfähige Polyamidformmassen erhält, die die genannten Nachteile nicht aufweisen, wenn man Polyamide mit speziellen endgruppen-modifizierten Polyethern- und/oder Polyestern mit Erweichungspunkten < 100 °C kombiniert. Daraus hergestellte Formkörper zeigen eine deutlich verbesserte Zähigkeit, die unmodifizierte Polyamide nur mit einem erheblich höheren Molgewicht aufweisen.

Besonders überraschend ist, dass die Fliessfähigkeit des Polyamids durch die Modifizierung nicht vermindert wird, sondern im wesentlichen gleich bleibt, wenn nicht vielfach erheblich besser wird. Die Fliessfähigkeit kann über die Art des Modifikators und die Fliesslänge des zu modifizierenden Polyamids eingestellt werden. Der Biegemodul bleibt bei der Modifizierung im wesentlichen unverändert.

Gegenstand der Erfindung sind daher leicht fliessfähige thermoplastisch verarbeitbare Polyamidformmassen, die 0,5–10, vorzugsweise 2–6 Gew.-% wenigstens eines Endgruppenmodifizierten Polyethers und/oder Polyesters mit einem MG von 500 bis $10^4$, vorzugsweise $10^3$–$5.10^3$ und einen Erweichungspunkt < 100 °C enthalten.

Geeignete Endgruppen der Polyether und Polyester sind die nachfolgend aufgezählten Reste X, die sich von α,β-ungesättigten Monocarbonsäuren, Kohlen- und Oxalsäureestern, Epoxiden, primären und/oder sekundären Aminen, N-α-Hydroxymethyllactamen ableiten, wobei der Polyether- bzw. Polyesterrest nicht direkt mit den genannten Endgruppen verbunden sein muss, sondern über einen Polyurethanrest verbunden sein kann.

Als Modifikatoren werden Polyester und Polyether der allgemeinen Formel

$$R\text{–}(X)_n$$

eingesetzt, in der

R einen n-wertigen (Poly)ether und/oder (Poly)-esterrest mit einem durchschnittlichen Molgewicht von 500–10 000, vorzugsweise von 1000–5000,

n eine ganze Zahl von 1–4, vorzugsweise 2 bedeutet, wobei für

R = ein Polyetherrest X für eine der folgenden Gruppen $X_1$ bis $X_7$ steht:

$X_1 = -O-CO-CR^1=CH_2$ mit $R^1 = H, CH_3$

$X_2 = -NR^2H$ mit $R^2 = H, C_{1-18}$-Alkyl;

$X_3 = -O-CO-O-R^3$ mit $R^3 = C_{1-18}$-Alkyl, gegebenenfalls substituiertes Aryl mit $C_6-C_{19}$

$X_4 = -O-CO-CO-O-R^3$

$X_5 =$ 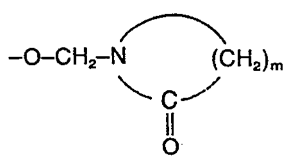 mit m = 4–11

$X_6 =$ 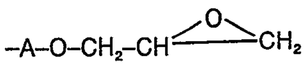

mit A eine Bindung oder ein Rest der allgemeinen Formel

$$-CH_2-CH-CH_2-O-Z-,$$

in der

Z für einen (cyclo)aliphatischen Rest mit bis zu 10 C-Atomen, einen aromatischen $C_{6-16}$-Rest oder aliphatisch-aromatischen $C_{7-18}$-Rest steht, wobei die Epoxidgruppen gegebenenfalls noch mit (Meth)acrylsäure oder Hydroxyalkyl($C_1-C_6$)-(meth)acrylat umgesetzt sein können, und

$X_7 =$ 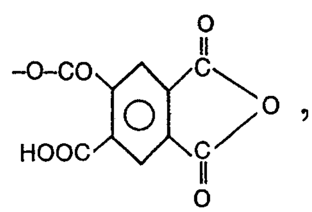 ,

wobei gegebenenfalls zwischen R und den Resten $X_1$ bis $X_6$ ein Polyurethanrest angeordnet ist.

Bevorzugt sind die Gruppen $O-CO-CR^1=CH_2$ und $-NR^2H$.

Geeignete Endgruppen für R = Polyesterrest sind die Gruppen $X_1$, $X_3$, $X_4$, $X_6$ und bevorzugt $X_1$ und $X_6$.

Die Herstellung der Modifikatoren ist literaturbekannt.

Modifizierte Polyether werden u.a. wegen ihrer leichten Dosierbarkeit (Viskosität) und ihrer Herstellbarkeit bevorzugt eingesetzt.

Ganz besonders bevorzugt werden mit (Meth)-acrylat bzw. primären Aminogruppen terminierte Polyether verwendet.

Die angegebenen Molekulargewichte der Polyether- bzw. Polyesterreste sind aus OH-Zahl bzw. Aminzahl der Ausgangskomponente bestimmt. Sie können auch durch Dampfdruck- bzw. Membranosmose, z.B. in Azeton, bestimmt werden (Mn).

Als Polyamide im Sinne der Erfindung können lineare Polykondensate von Lactamen oder mit korrespondierenden Aminosäuren 4–12 Kohlenstoffatomen bzw. übliche Polykondensate aus Diaminen und Dicarbonsäuren, wie 6,6-, 6,7-, 6,8-, 6,9-, 6,10-, 6,12-, 8,8-, 12,12-Polyamid, oder Polykondensate aus aromatischen Dicarbonsäuren wie Isophthalsäure, Terephthalsäure mit Diaminen wie Hexamethylendiaminen, Octamethylendiamin, aus araliphatischen Ausgangsstoffen wie m- oder p-Xylylendiaminen und Adipinsäure, Korksäure, Sebazinsäure und Polykondensate auf Basis von alicyclischen Ausgangsstoffen wie Cyclohexandicarbonsäure, Cyclohexandiessigsäure, Diaminodicyclohexylmethanen, Isophorondiamin verwendet werden.

Gleichermassen können Gemische der genannten Polyamide oder aus den genannten Bausteinen erhältliche Copolyamide Verwendung finden. Die Erweichungspunkte der Ausgangspolyamide sollen mindestens 150 °C betragen. Vorzugsweise werden teilkristalline Polyamide verwendet.

Die rel. Viskosität der einzusetzenden Polyamide sollte mindestens 1,8 (gemessen in 1%iger Lösung in m-Kresol bei 25 °C) betragen.

Besonders bevorzugt werden die üblicherweise für techn. Spritzgussartikel eingesetzten 6,-, 6,6-, 6,9-, 6,10-, 6,12-, 11- und 12-Polyamide verwendet sowie Copolyamide, die zum überwiegenden Anteil auf Basis der obengenannten Polyamide aufgebaut sind und deren relative Viskosität etwa 1,8–5,0, vorzugsweise 2,0–3,5 beträgt.

Anstelle von Polyamiden lassen sich Polymerlegierungen einsetzen, die überwiegend, vorzugsweise zu mindestens 70 Gew.-% aus Polyamiden bestehen und deren Legierungs-Komponente prinzipiell bekannte elastifizierende Polymere wie z.B. Polyolefine, olefinische Copolymerisate, vorzugsweise solche mit Anteilen an eingebauten polaren Gruppen bzw. auch entsprechende Pfropf-(Co)-polymerisate sein können.

Produkte dieser Art sind z.B. aus der DAS 1 241 606 oder DOS 2 758 568 bekannt.

Zur Herstellung der erfindungsgemässen modifizierten Polyamide können die Polyamidkomponente und der Modifikator oberhalb des Schmelzpunktes des Polyamids miteinander vermischt werden. Dies kann z.B. unmittelbar nach der Herstellung des Polyamids durch Vermischen des Modifikators mit der als Strang abzuspinnenden Schmelze erfolgen. Vorzugsweise werden die erfindungsgemäss modifizierten Polyamide durch Mischen der Ausgangskomponenten in üblichen Schneckenmaschinen hergestellt.

Dieses Verfahren wird insbesondere gewählt, wenn neben Polyamiden weitere Polymere zur Herstellung entsprechend modifizierter Polymerlegierungen eingesetzt werden oder andere Additive wie Stabilisatoren, Entformungsmittel, Gleitmittel, Kristallisationsbeschleuniger, Weichmacher, Pigmente, Farb-, Verstärkungs- und/oder Füllstoffe, wie Glasfasern oder Asbest, in bekannten Mengen eingearbeitet werden sollen.

Zur Compoundierung eignen sich übliche bekannte Apparaturen. Doppelschneckenextruder werden bevorzugt eingesetzt.

Die erfindungsgemäss modifizierten Polyamide sind besonders leichtfliessende Produkte, die sich in handelsüblichen Spritzgiessmaschinen problemlos zu Formkörpern verarbeiten lassen. Diese zeichnen sich durch eine verbesserte Kerbschlagzähigkeit aus und weisen ausserdem die sonstigen polyamid-typischen hohen Gebrauchseigenschaften auf.

Formkörper aus den erfindungsgemässen Polyamidformmassen lassen sich auch ohne zusätzliche Additive besser entformen als unmodifizierte Produkte und zeichnen sich obendrein durch eine sehr gute Oberflächenbeschaffenheit aus.

I. Herstellung der Modifikatoren

Beispiel A

75,6 g Acrylsäure
2100 g eines Ethylenoxid-Propylenoxid-Mischpolyethers mit Ethylenoxid getippt (OH—Zahl 28, bifunktionell, Jodfarbzahl 0–1, Mol-Gew. ca. 4000)
18,5 g p-Toluolsulfonsäure gelöst in 18,5 g Wasser
3,26 g 2,5-Di-tert.-butylhydrochinon
2,16 g p-Methoxyphenol
2,16 g 2,6-Di-tert.-butyl-4-methylphenol
ca. 900 g Toluol

werden bei 125–130 °C am Wasserabscheider gekocht, wobei man gleichzeitig langsam Luft einleitet. Nach Erreichen der Säurezahl 4 wird Toluol abgezogen. Das Produkt ist eine fast farblose niederviskose Flüssigkeit mit einer Säurezahl von 6.

Beispiele B–G

Die nachfolgenden (Meth)acrylsäureester oder Polyester (E) werden analog zu Beispiel A hergestellt:

B: Bisacrylat eines Polyethylenglykols mit einem Molgewicht $M_n$ von 200
C: Monoacrylat eines monofunktionellen Propylenoxid/Ethylenoxid-Misch-polyether (Molgewicht ca. 2800)
D: Bisacrylat von Polytetrahydrofuran (Molgewicht ca. 2000)
E: Bisacrylat eines Polyesterdiols mit einem Molgewicht von ca. 2000 aus Dimerfettsäure (Empol 1010®)/Hexandiol
F: Bisacrylat eines Polyethers aus Tetrahydrofuran und Decenoxid (Molgewicht ca. 1750)
G: Bismethacrylat eines Propylenoxid/Ethylenoxid-Mischpolyethers, EO-getippt, (Molgewicht ca. 2000)

Die Molgewichte sind aus den OH–Zahlen der Mono- bzw. Polyole berechnet.

Die Produkte aus den Versuchen B bis G sind fast farblos bis gelblich, die Säurezahlen liegen zwischen 2 und 6. Es sind niedrigviskose, gut dosierbare Flüssigkeiten mit Ausnahme von Beispiel D. Dieses Produkt ist fest und geht bei ca. 37 °C in eine dünnflüssige Schmelze über.

Beispiel H

1 kg eines bifunktionellen Polyetherdiols auf Basis Propylenoxid mit einem Molgewicht von ca. 2000 wurde mit 1 kg Diethylcarbonat und 3 g Natriummethylat unter Rühren zum Sieden erhitzt. Im Verlauf von 20 Stdn. wurde am Kolonnenkopf Ethanol abgezogen und anschliessend der Diethylcarbonatüberschuss im Vakuum entfernt. Der Rückstand ist eine niederviskose helle Flüssigkeit.

Beispiel K

1 kg eines Polyetherdiols, wie in Beispiel H verwendet, wurde mit 1 kg Diethyloxalat und 3 g Natriummethylat unter Rühren zum Sieden erhitzt.

Im Verlauf von 20 h wurde am Kolonnenkopf Ethanol abgezogen und anschliessend der Diethyloxalat-Überschuss im Vakuum entfernt. Der Rückstand ist eine niederviskose helle Flüssigkeit.

Beispiel L

1 kg (0,5 Mol) eines Polyethers (wie in Beispiel G verwendet) wurde in 5 h mit 148 g (1 Mol) Phthalsäureanhydrid umgesetzt. Das Produkt mit einer SZ von 60 wurde zusammen mit 5,7 g p-Toluolsulfonsäure zu 380 g (1 Mol) bei 100 °C vorgelegten Bisphenol A-bisglycidethers langsam zugetropft. Das Endprodukt besitzt eine Rest-SZ von 3,8 und ist eine mittelviskose Flüssigkeit.

Beispiel M

1 kg (0,5 Mol) eines Polyethers (wie in Beispiel G verwendet) wurde mit 158 g (1 Mol) N-Methoxymethylcaprolactam und 1 g p-Toluolsulfonsäure 5 Stunden auf 122 °C, 3 h auf 137 °C und 3 h auf 156 °C erhitzt. Dabei wird Methanol abgespalten. Der Rückstand ist eine braune Flüssigkeit mit einem Stickstoffgehalt von 1,2 Gew.-%.

Beispiel N

1 kg (0,5 Mol) eines Polyethers (wie in Beispiel G verwendet) wurde mit 218 g (1 Mol) Pyromellitsäureanhydrid innerhalb 1,5 h auf 120 °C aufgeheizt und danach 1 h bei 120 °C gerührt.

Man erhält eine mittelviskose Flüssigkeit mit einer Anhydrid-Säurezahl von 41 und einer freien Säurezahl von 96.

II. Herstellung der modifizierten Polyamide

Beispiel 1

97 Gew.-Teile eines 6-Polyamids mit einer relativen Viskosität von 2,8, gemessen in 1%iger Lösung in m-Kresol bei 25 °C, einer nach DIN 53453 bestimmten Kerbschlagzähigkeit von 2,37 kJ/m² und einer Fliesslänge* von 65 cm und 3 Gew.-Teile des Acrylsäureesters nach Beispiel A werden getrennt mittels einer Dosierwaage bzw. einer Dosierpumpe in einen Zweiwellenextruder vom Typ ZSK 53 gefördert und bei 260° mit 90 UpM extrudiert. Die homogene Schmelze wird als Strang in ein Wasserbad abgesponnen, granuliert und bei 80–100 °C bis zu einem Wassergehalt von weniger als 0,1 Gew.-% getrocknet. Das Produkt hat eine relative Viskosität von 2,73, eine Kerbschlagzähigkeit von 4,3 kJ/m² und eine Fliesslänge von 74,5 cm. Die Grenzbiegespannung beträgt 111 N/mm² ab. (DIN 53 452)

* Die Fliesslänge ist ein Mass für die Fliessfähigkeit eines Produktes und damit für seine Verarbeitbarkeit, höhere Fliesslänge bedeutet bessere Fliessfähigkeit und damit kürzere Spritzcyclen. Die Fliesslänge wurde wie folgt bestimmt: In ein spezielles Werkzeug, das auf 90° gehalten wird, wird mittels einer Spritzgiessmaschine, deren Zylindertemperatur 260 °C beträgt, die zu untersuchende Probe mit einem Spritzdruck von 72 bar eingespritzt. Besonders leichtfliessende Werkstoffe sind in der Lage, unter diesen Bedingungen das Werkzeug zu füllen, so dass man nachher eine 100 cm lange Spirale entnehmen kann. Weniger fliessfähige Werkstoffe füllen unter den beschriebenen Bedingungen das Werkzeug nur teilweise; dann können infolge der vorzeitigen Erstarrung der Schmelze nur Spiralkörper von < 100 cm Länge erhalten werden. Als Fliesslänge wird die Länge in cm angegeben, die 5mal reproduziert wurde.

Beispiel 2

Polyamid-6 wird wie in Beispiel 1 beschrieben mit 10 Gew.-% Acrylatpolyether nach Beispiel A modifiziert. Die Messergebnisse sind in Tabelle 1 genannt.

Vergleichsversuch 1

Bei einem Polyamid-6 werden durch herkömmliche Nachkondensation die relative Viskosität und die Kerbschlagzähigkeit erhöht. Dabei vermindert sich die Fliessfähigkeit. Die entsprechenden Eigenschaften zeigt die Tabelle 1.

Vergleichsversuch 2

Caprolactam wird durch übliche Polykondensation in einem Autoklaven hergestellt, wobei Essigsäure als Kettenabbrecher verwendet wird. Das Produkt ist gut fliessfähig, hat aber keine technisch brauchbare Zähigkeit, vergleiche Tabelle 1.

Beispiel 3

94 Gew.-Teile Polyamid-6 ($\eta_{rel}$ 2,1) werden nach dem in Beispiel 1 beschriebenen Verfahren mit 6% Acrylester nach Beispiel A extrudiert. Die Ergebnisse sind in Tabelle 1 zusammengestellt.

Beispiele 4–6

Die in Beispiel 1 beschriebene Versuchsdurchführung wird wiederholt, wobei auch das Polyamid variiert wird. Die Zusammensetzung der Produkte und deren Eigenschaften sind in Tabelle 1 zusammengefasst. Das 6,6-Polyamid wurde bei 275° extrudiert.

Beispiele 7–12

Wie in Beispiel 1 beschrieben, wird Polyamid-6 mit einer relativen Viskosität von 2,8 mit verschiedenen (Meth)-Acrylatpolyethern bzw. Polyestern extrudiert. Die gemessenen Eigenschaften der modifizierten Polyamide sind in Tabelle 2 zusammengestellt.

Vergleichsversuch 3

Polyamid-6 wird wie in dem Beispiel 1 beschrieben mit dem Modifikator nach Beispiel B, der ein niedriges Molekulargewicht von 200 hat, extrudiert. Die Ergebnisse sind in der Tabelle 2 enthalten.

Beispiel 13

67 Gew.-Teile Polyamid aus Beispiel 1, 30 Gew.-Teile handelsübliche Glasfasern Silenka 8041 und 3 Gew.-Teile des Modifikators nach Beispiel A werden wie in Beispiel 1 beschrieben compoundiert.
Produkteigenschaften:
rel. Visk.: 2,8
Fliesslänge: 62 cm
Kerbschlagzähigkeit 13,0 kJ/$cm^2$

Tabelle 1

| Bsp. | Typ | $\eta_{rel}$ | Polyamid Gew.-Tle. | $a_k$ (KJ/$m^2$) | Fliesslänge (cm) | Modifikator Bsp. | Gew.-Tle. | $\eta_{rel}$ | modifiziertes Polyamid $a_k$ (kJ/$m^2$) | Fliesslänge (cm) |
|---|---|---|---|---|---|---|---|---|---|---|
| 1 | 6-PA | 2,8 | 97 | 2,37 | 65 | A | 3 | 2,73 | 4,3 | 75 |
| 2 | 6-PA | 2,8 | 90 | 2,37 | 65 | A | 10 | 2,9 | 10,3 | 67 |
| 3 | 6-PA | 2,1 | 94 | 0,9 | 100 | A | 6 | 2,0 | 5,2 | 100 |
| 4 | 6,I-PA | 2,4 | 97 | 2 | 27 | A | 3 | 2,5 | 6,0 | 28 |
| 5 | 6,6-PA | 2,9 | 97 | 2,1 | 75 | A | 3 | 2,9 | 5,4 | 93 |
| 6 | 6,6-PA | 2,9 | 94 | 2,1 | 75 | A | 6 | 2,8 | 6 | 95 |
| Vgl. | Vers. | | | | | | | | | |
| 1 | 6-PA | 2,8 | 100 | 2,37 | 65 | – | 0 | 3,8 | 4,5 | 30 |
| 2 | 6-PA | 2,1 | 100 | 0,9 | 100 | – | 0 | – | – | – |

$a_k$ = Kerbschlagzähigkeit nach DIN 53453 im spritzfrischen Zustand
6-PA = Polycaprolactam
6,I-PA = Polyhexamethylenisophthalamid
6,6-PA = Polyhexamethylenadipamid

Tabelle 2

| | | Modifikator Gew.-Tle | Bsp.Typ | modifiziertes Polyamid $\eta$rel | $a_k$ (kJ/m²) | Fliesslänge (cm) |
|---|---|---|---|---|---|---|
| Vergleichsversuch | 3 | 3 | B | 2,8 | 2,3 | 63 |
| Beispiel | 7 | 3 | C | 2,7 | 5,4 | 78 |
| Beispiel | 8 | 9 | C | 2,7 | 6,0 | 84 |
| Beispiel | 9 | 3 | D | 2,6 | 7,9 | 74 |
| Beispiel | 10 | 3 | E | 2,7 | 3,6 | 75 |
| Beispiel | 11 | 3 | F | 2,7 | 6,4 | 82 |
| Beispiel | 12 | 3 | G | 2,8 | 4,5 | 75 |

Vergleichsversuch 4

Ist eine Wiederholung des Beispiels 13 ohne Verwendung des Modifikators nach Beispiel A.

Produkteigenschaften:
rel. Viskosität: 2,8
Fliesslänge: 43 cm
Kerbschlagzähigkeit: 13,0 kJ/m²

Vergleichsversuch 5

Polyamid aus Beispiel 1 wird mit einem Isocyanat behandelt, um die Kerbschlagzähigkeit zu erhöhen. Dabei wird in Folge des erhöhten Molgewichtes die Fliesslänge kürzer. Die Ergebnisse sind in Tabelle 3 zusammengestellt.

Tabelle 3

| Vergleichsversuch | Modifikator Gew.-Tle. | Typ | modifiziertes Polyamid $\eta$rel | $a_k$ (kJ/m²) | Fliesslänge (cm) |
|---|---|---|---|---|---|
| 5 | 1 | H | 4,4 | 3,9 | 27 |

H = Desmodur VK® (Diphenylmethandiisocyanat mit ca 35% mehrfunktionellen Mehrkernanteilen)

Beispiel 14

97 Gew.-Teile Polyamid-6, wie in Beispiel 1 beschrieben, werden mit 3 Gew.-Teilen eines Polyetherurethanacrylats nach Beispiel 7 der DAS 2 115 373 compoundiert.

rel. Viskosität: 2,8
Fliesslänge: 66 cm
Kerbschlagzähigkeit: 4,9 kJ/m²

Beispiele 15–20

Polyamid-6 wird, wie in Beispiel 1 beschrieben, mit Modifikatoren mit verschiedenen Endgruppen compoundiert. Der Modifikator P bewirkt eine so starke Verbesserung des Fliessverhaltens, dass die Fliesslänge 100 cm lang ist. Die Modifikation nach Beispiel H, K, L, M und N bewirken geringfügige bis deutliche Erhöhung der Fliesslänge. Die Ergebnisse sind in Tabelle 4 dargestellt.

Tabelle 4

| Bsp. | Modifikator Typ gem. Beispiel | Gew.-% | modifiziertes Polyamid Kerbschlagzähigkeit kJ/m² | Grenzbiegespannung N/mm² |
|---|---|---|---|---|
| 15 | H | 3 | 7,3 | 112 |
| 16 | K | 3 | 7,3 | 115 |
| 17 | L | 3 | 5,2 | 115 |
| 18 | M | 3 | 7,5 | 110 |
| 19 | N | 3 | 6,3 | 110 |
| 20 | P | 6 | 5,1 | – |
| Vergleichs-Versuch | | | | |
| 6 | Q | 3 | 3,4 | 95 |

Q = Polyetherdiol wie für Beispiel H verwendet
P = Bis-(3-aminopropyl)-polytetrahydrofuran (MG 750)

Vergleichsversuch 6

Polyamid-6 wird wie in Beispiel 1 beschrieben mit einem Polyetherdiol, wie er für Beispiel G verwendet wurde, compoundiert. Bei kaum erhöhter Zähigkeit nimmt die Steifigkeit erheblich ab.

Vergleichsversuche 7–10

Zum Vergleich mit den erfindungsgemässen Produkten wurden Polyether mit Aminoendgruppen zusammen mit einer stöchiometrischen Menge Adipinsäure als Comonomere bei der üblichen hydrolytischen Polykondensation von Caprolactam verwendet. Die Produkte weisen keine verbesserten Zähigkeiten auf. Nur Produkte nach Vergleichsversuch 10 zeigen eine hohe Kerbschlagzähigkeit, wobei aber die Fliessfähigkeit und Biegefestigkeit nicht ausreichend sind. Die Zusammensetzung der Produkte und deren Eigenschaften zeigt Tabelle 5.

Tabelle 5

| Vergleichsversuch | Polyethermonomer Typ | Gew.-% | Produkteigenschaften Biegef. (N/mm²) | Kerbschlagzähigkeit kJ/m² | ηrel | Fliessl. (cm) |
|---|---|---|---|---|---|---|
| 7 | I | 3 | 117 | 2,2 | 3,1 | 55 |
| 8 | II | 3 | 110 | 2,3 | 2,8 | 57 |
| 9 | II | 6 | 108 | 2,1 | 2,8 | 46 |
| 10 | II | 10 | 88 | 8,3 | 3,1 | 24 |

I = Polytetrahydrofuran mit 3-Aminopropylengruppen, MG = 1100
II = Polypropylenoxid-Polyether mit durch $NH_2$ ausgetauschte OH-Endgruppen, MG = 2000

**Patentansprüche**

1. Leicht fliessfähige, thermoplastisch verarbeitbare Polyamidformmassen, die 0,5–10 Gew.-% wenigstens eines endgruppenmodifizierten Polyethers und/oder Polyesters mit einem MG von 500–$10^4$ und einem Erweichungspunkt < 100 °C enthalten, der die allgemeine Formel

$$R-(X)_n$$

hat, in der

R einen n-wertigen (Poly)etherrest oder (Poly)-esterrest mit einem durchschnittlichen Molgewicht von 500–10 000,

n eine ganze Zahl von 1–4;

und

X = für R = Polyetherrest eine der folgenden Gruppen:

$X_1$ = $-O-CO-CR^1=CH_2$ mit $R^1$ = H, $CH_3$

$X_2$ = $-NR^2H$ mit $R^2$ = H, $C_{1-18}$-Alkyl;

$X_3$ = $-O-CO-O-R^3$ mit $R^3$ = $C_{1-18}$-Alkyl, gegebenenfalls substituiertes Aryl mit $C_6$–$C_{19}$

$X_4$ = $-O-CO-CO-O-R^3$ und $R^3$ mit der angegebenen Bedeutung

$X_5$ = 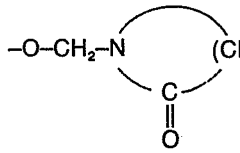 mit m = 4–11

$X_6$ = 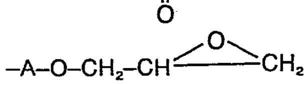

mit A eine Bindung oder ein Rest der allgemeinen Formel

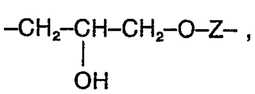

in der

Z für einen (cyclo)aliphatischen Rest mit bis zu 10 C-Atomen, einen aromatischen $C_{6-16}$ Rest oder aliphatisch-aromatischen $C_{7-18}$ Rest steht,

wobei die Epoxidgruppen gegebenenfalls noch mit (Meth)-acrylsäure oder Hydroxyalkyl($C_1$–$C_5$)(meth)acrylat umgesetzt sein können,

und

$X_7$ = 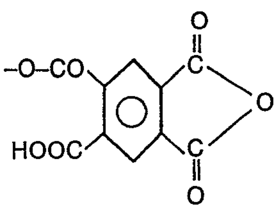

und für

R = Polyesterrest,

X = eine der Gruppen $X_1$, $X_3$, $X_4$ oder $X_6$ der obigen Definition

bedeuten, wobei gegebenenfalls zwischen R und den Resten $X_1$ bis $X_6$ ein Polyurethanrest angeordnet ist.

2. Polyamidformmassen nach Anspruch 1, dadurch gekennzeichnet, dass sie 2–6 Gew.-% des Polyethers oder Polyesters enthalten.

3. Polyamidformmassen nach Anspruch 1 oder 2, dadurch gekennzeichnet, dass der Polyether oder Polyester ein Molekulargewicht von $10^3$–$5 \times 10^3$ aufweist.

4. Polyamidformmassen nach Ansprüchen 1–3, dadurch gekennzeichnet, dass ein Polyether mit $-O-CO-CR^1=CH_2$ oder $NR^2H$ oder ein Polyester mit $X_6$ oder $X_1$ als Endgruppen verwendet wird.

5. Polyamidformmassen nach Anspruch 4, dadurch gekennzeichnet, dass als Polyether-Endgruppen (Meth)acrylate oder primäre Aminogruppen vorhanden sind.

6. Polyamidformmassen nach Ansprüchen 1–5, dadurch gekennzeichnet, dass aliphatische Polyamide eingesetzt werden.

7. Polyamidformmassen nach Ansprüchen 1–6, dadurch gekennzeichnet, dass als Polyamid, Polyamid-6 und/oder Polyamid-6,6 verwendet wird.

8. Polyamidformmassen nach Ansprüchen 1–7, dadurch gekennzeichnet, dass die Formmassen Hilfs- und Zusatzstoffe enthalten.

9. Polyamidformmassen nach Ansprüchen 1–8, dadurch gekennzeichnet, dass sie bis zu 30 Gew.-% eines elastifizierenden Polymeren enthalten.

10. Formkörper aus Formmassen nach Ansprüchen 1 bis 9.

## Claims

1. Easily flowable, thermoplastically processible polyamide moulding compositions which contain 0.5–10% by weight of at least one end-group-modified polyether and/or polyester having a MW of 500–$10^4$ and a softening point $< 100\,°C$ which has the general formula

$$R\text{–}(X)_n$$

in which

R denotes an n-valent (poly)ether radical or (poly)ester radical having an average molecular weight of 500–10,000,

n denotes an integer from 1–4;

and

X denotes one of the following groups when R = a polyether radical:

$X_1$ = $-O-CO-CR^1=CH_2$ wherein $R^1$ = H or $CH_3$,

$X_2$ = $-NR^2H$ wherein $R^2$ = H or $C_{1-18}$ alkyl;

$X_3$ = $-O-CO-O-R^3$ wherein $R^3$ = $C_{1-18}$ alkyl or optionally substituted aryl with $C_6$–$C_{19}$

$X_4$ = $-O-CO-CO-O-R^3$ and $R^3$ with the meaning mentioned

$X_5$ = 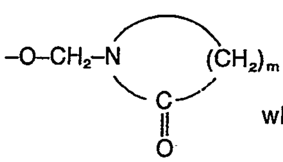 wherein m = 4–11

$X_6$ = 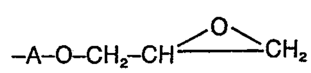

wherein A denotes a bond or a radical of the general formula

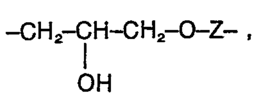

in which

Z represents a (cyclo)aliphatic radical with up to 10 C atoms, an aromatic $C_6$–$C_{16}$ radical or an aliphatic-aromatic $C_{7-18}$ radical,

the epoxide groups optionally having also been reacted with (meth)acrylic acid or hydroxyalkyl ($C_1$–$C_5$) (meth)acrylate,

and

$X_7$ = 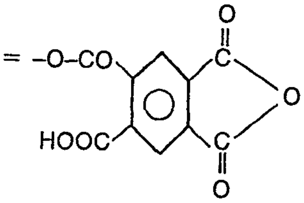

and, when R = a polyester radical,

X denotes one of the groups $X_1$, $X_3$, $X_4$ or $X_6$ as defined above,

a polyurethane radical optionally being positioned between R and the radicals $X_1$ to $X_6$.

2. Polyamide moulding compositions according to Claim 1, characterised in that they contain 2–6% by weight of the polyether or polyester.

3. Polyamide moulding compositions according to Claim 1 or 2, characterised in that the polyether or polyester has a molecular weight of $10^3$–$5 \times 10^3$.

4. Polyamide moulding compositions according to Claims 1–3, characterised in that a polyether with $-O-CO-CR^1=CH_2$ or $NR^2H$ or a polyester with $X_6$ or $X_1$ as the end groups is used.

5. Polyamide moulding compositions according to Claim 4, characterised in that (meth)acrylates or primary amino groups are present as the polyether end groups.

6. Polyamide moulding compositions according to Claims 1–5, characterised in that aliphatic polyamides are used.

7. Polyamide moulding compositions according to Claims 1–6, characterised in that polyamide-6 and/or polyamide-6,6 is used as the polyamide.

8. Polyamide moulding compositions according to Claims 1–7, characterised in that the moulding compositions contain auxiliaries and additives.

9. Polyamide moulding compositions according to Claims 1–8, characterised in that they contain up to 30% by weight of an elasticating polymer.

10. Mouldings made from moulding compositions according to Claims 1 to 9.

## Revendications

1. Matières à mouler en polyamides fluides à l'état fondu, aptes au travail thermoplastique, contenant de 0,5 à 10% en poids d'au moins un polyéther et/ou polyester à groupes terminaux modifiés, de poids moléculaire 500 à $10^4$ et dont le point de ramollissement est inférieur à 100 °C, répondand à la formule générale

$$R\text{–}(X)_n$$

dans laquelle

R représente un reste de (poly)éther ou de (poly)ester de valence n et de poids moléculaire moyen 500 à 10 000;

n est un nombre entier de 1 à 4;

et

X, lorsque R représente un reste de polyéther, est l'un des groupes suivants:

$X_1$ = $-O-CO-CR^1=CH_2$ avec $R^1$ = H, $CH_3$

$X_2 = -NR^2H$ avec $R^2 = H$, alkyle en $C_{1-18}$

$X_3 = -O-CO-O-R^3$ avec $R^3$ = alkyle en $C_1-C_{18}$, aryle éventuellement substitué en $C_6-C_{19}$

$X_4 = -O-CO-CO-O-R^3$, $R^3$ ayant la signification indiquée ci-dessus,

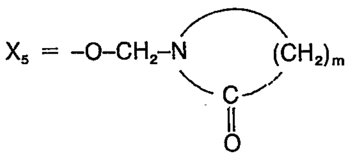

avec m = 4 à 11

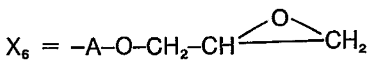

A représentant une liaison ou un reste de formule générale

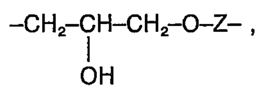

dans laquelle

Z représente un reste (cyclo)aliphatique contenant jusqu'à 10 atomes de carbone, un reste aromatique en $C_6-C_{16}$ ou un reste aliphatique-aromatique en $C_7-C_{18}$,
les groupes époxydes peuvent encore le cas échéant avoir réagi avec l'acide (méth)acrylique ou un (méth)acrylate d'hydroxyalkyle en $C_1-C_5$, et

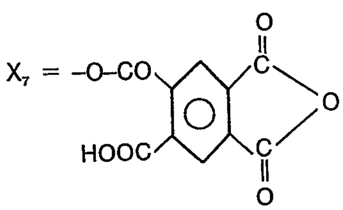

et lorsque R représente un reste de polyester,

X représente l'un des groupes $X_1$, $X_3$, $X_4$ ou $X_6$ définis ci-dessus, un reste de polyuréthanne pouvant le cas échéant exister entre R et les restes $X_1$ à $X_6$.

2. Matières à mouler en polyamides selon la revendication 1, caractérisées en ce qu'elles contiennent de 2 à 6% en poids du polyéther ou polyester.

3. Matières à mouler en polyamides selon la revendication 1 ou 2, caractérisées en ce que le polyéther ou polyester présente un poids moléculaire de $10^3$ à $5 \times 10^3$.

4. Matières à mouler en polyamides selon les revendications 1 à 3, caractérisées en ce que l'on a utilisé un polyéther à groupes terminaux $-O-CO-CR^1=CH_2$ ou $NR^2H$ ou un polyester à groupes terminaux $X_6$ ou $X_1$.

5. Matières à mouler en polyamides selon la revendication 4, caractérisées en ce que les groupes terminaux du polyéther sont des groupes (méth)acrylate ou amino primaires.

6. Matières à mouler en polyamides selon les revendications 1 à 5, caractérisées en ce que l'on utilise des polyamides aliphatiques.

7. Matières à mouler en polyamides selon les revendications 1 à 6, caractérisées en ce que le polyamide utilisé est un polyamide-6 et/ou un polyamide-6,6.

8. Matières à mouler en polyamides selon les revendications 1 à 7, caractérisées en ce qu'elles contiennent des produits auxiliaires et additifs.

9. Matières à mouler en polyamides selon les revendications 1 à 8, caractérisées en ce qu'elles contiennent jusqu'à 30% en poids d'un polymère élastifiant.

10. Objets moulés à partir des matières à mouler selon les revendications 1 à 9.